# NEUE EUROPÄISCHE PATENTSCHRIFT

(11) **EP 3 840 903 B2**
(45) Veröffentlichungstag und Bekanntmachung des Hinweises auf die Entscheidung über den Einspruch: **11.11.2026**
(45) Hinweis auf die Patenterteilung: 15.11.2023
(21) Anmeldenummer: 19755365.4
(22) Anmeldetag: 15.08.2019
(51) Int. Cl.: B23D 61/04, B23D 61/14, B23D 65/00

(54) **VERFAHREN ZUM FÜGEN VON HARTSTOFFKÖRPERN AN ZÄHNE EINES SÄGEBLATTS, VORRICHTUNG ZUM DURCHFÜHREN DIESES VERFAHRENS, UND SÄGEBLATT**
METHOD FOR JOINING HARD MATERIAL BODIES TO TEETH OF A SAW BLADE, DEVICE FOR CARRYING OUT THIS PROCESS, AND SAW BLADE
PROCÉDÉ SERVANT À ASSEMBLER DES CORPS EN MATÉRIAU DUR À DES DENTS D'UNE LAME DE SCIE, DISPOSITIF POUR LA MISE EN OEUVRE DE CE PROCÉDÉ, ET LAME DE SCIE

(30) Priorität: 20.08.2018 DE 102018120243
(43) Veröffentlichungstag der Anmeldung: 30.06.2021
(73) Patentinhaber: Credé Vermögensverwaltungs-GmbH + Co. KG, 75181 Pforzheim (DE)
(72) Erfinder: CREDÉ, Marcel, 75173 Pforzheim (DE)
(74) Vertreter: DREISS Patentanwälte PartG mbB
(86) Internationale Anmeldenummer: PCT/EP2019/071906
(87) Internationale Veröffentlichungsnummer: WO 2020/038818

(56) Entgegenhaltungen:
- WO-A1-92/19408
- WO-A1-94/26450
- CN-U- 202 079 511
- DE-A1- 10 040 493
- FR-A1- 2 473 375

## Beschreibung

Die Erfindung betrifft ein Verfahren zum Fügen von Hartstoffkörpern an Zähne eines Sägeblatts, insbesondere eines Band- oder Kreissägeblatts, wobei ein jeweiliger Zahn eine Zahnbrust und einen Zahnrücken aufweist, und wobei das Verfahren die folgenden Schritte umfasst:
- Verbringen eines jeweiligen Zahns des Sägeblatts in einen Arbeitsbereich;
- Heranführen eines jeweiligen Hartstoffkörpers an den sich im Arbeitsbereich befindlichen Zahn;
- Zustellen einer Fügeeinrichtung in den Arbeitsbereich;
- Fügen des Hartstoffkörpers an den sich im Arbeitsbereich befindlichen Zahn;
- Rückstellen der Fügeeinrichtung aus dem Arbeitsbereich.

Die Erfindung betrifft weiterhin ein Sägeblatt mit an Zähnen angefügten Hartstoffkörpern.

Bei den Zähnen des Sägeblatts ist die Zahnbrust auf einer in Schneidrichtung vorderen Seite eines jeweiligen Zahns ausgebildet und der Zahnrücken ist auf einer von der Schneidrichtung abgewandten, hinteren Seite des Zahns ausgebildet, wobei mit einer Schneidrichtung die Richtung gemeint ist, in die das Sägeblatt bei einem Sägevorgang relativ zu einem zu sägenden Werkstück bewegt wird. Ein jeweiliger Zahn kontaktiert daher ein zu schneidendes Werkstück mit der Brust zuerst.

Unter einem Hartstoffkörper wird hier ein Körper an sich beliebiger Geometrie, insbesondere Kugel, Zylinder, Plattenform, aus einem Hartstoff, insbesondere Hartmetall, Cermet, Schneidkeramik, Diamant, verstanden. Der Hartstoffkörpers weist beispielsweise eine Höhe von 1 mm bis 4,5 mm, vorzugsweise 1,5 mm bis 3,5 mm, eine Breite von 1 mm bis 6 mm, vorzugweise 1,5 mm bis 3,5 mm und eine Länge von 2 mm bis 6 mm, vorzugsweise 3 mm bis 4,5 mm auf.

Aus dem Stand der Technik sind bereits Verfahren zum Fügen von Hartstoffkörpern an Zähne von Sägeblättern bekannt.

Üblicherweise werden die Hartstoffkörper an die Zahnbrust der Zähne des Sägeblatts, also an die in Schneidrichtung gewandte Seite angefügt, und im Anschluss an das Fügen durch weitere Bearbeitungsschritte, beispielsweise durch Schleifen, in die gewünschte Form gebracht, sodass an der Zahnbrust anschließend eine Schneidgeometrie ausgebildet ist.

Der an der Zahnbrust verfügbare Platz zum Anschweißen des Hartstoffkörpers wird zum einen durch die Höhe der Zähne und zum anderen durch den Abstand zum in Schneidrichtung vorhergehenden Zahn begrenzt.

Aus der WO 94/26450 ist ein Sägeblatt bekannt, bei dem Schneidplättchen an Zähne des Sägeblatts angeklebt sind.

Weiter sind aus dem Stand der Technik Verfahren und Vorrichtungen bekannt, bei denen kein einzelner Hartstoffkörper an einen jeweiligen Zahn gefügt wird, sondern ein Werkstoff von einer Stellit-Stange abgeschmolzen und flüssig auf den Zahn aufgetragen wird oder die Stellit-Stange als Ganzes zunächst mit dem Zahn verbunden und anschließend abgeschnitten wird, vgl. FR 2 473 375 A1 und WO 92/19408.

Der Erfindung liegt die Aufgabe zugrunde, ein Verfahren zum Fügen von Hartstoffkörpern an Zähne eines Sägeblatts anzugeben, mit dem die Nachteile der aus dem Stand der Technik bekannten Verfahren überwunden werden können. Erfindungsgemäß wird daher vorgeschlagen, dass der jeweilige Hartstoffkörper an den Zahnrücken des jeweiligen Zahns gefügt wird. Der Zahnrücken ist auf der von der Schneidrichtung abgewandten Seite des Zahns ausgebildet. Es wird also vorgeschlagen, dass der Hartstoffkörper an die von der Schneidrichtung abgewandte Seite des Zahns gefügt wird.

Prinzipiell sind zum Anfügen der Hartstoffkörper an die Zähne des Sägeblatts verschiedene Fügeverfahren denkbar. Erfindungsgemäß ist vorgesehen, dass die Fügeeinrichtung eine Schweißeinrichtung mit einer Schweißelektrode ist, und der jeweilige Hartstoffkörper und der jeweilige Zahn durch Widerstandsschweißen aneinander gefügt werden. Hierbei werden die Schweißobjekte an der Schweißstelle durch Energiezufuhr aufgeschmolzen und typischerweise unter der Wirkung einer Anpresskraft durch Erstarren der Schmelze verschweißt.

Erfindungsgemäß kann in einem dem Fügevorgang vorhergehenden Schritt an dem Zahnrücken eines jeweiligen Zahn des Sägeblatts mindestens ein von einer Fügefläche des Zahns vorstehender Schweißeinleitungsansatz ausgebildet werden, der beim Einleiten eines Schweißimpulses auf- bzw. eingeschmolzen wird.

Der Schweißeinleitungsansatz ist beispielsweise spitzkegelförmig, halbkugelförmig, halbzylinderförmig, tropfenförmig, erbsenförmig oder pyramidenförmig, vorstehend von der Fügefläche des Zahns ausgebildet. Die Höhe oder Länge des Schweißeinleitungsansatzes beträgt 0,02 mm bis 2 mm, vorzugsweise 0,05 mm bis 0,8 mm, insbesondere 0,1 mm bis 0,8 mm, sodass der Schweißeinleitungsansatz 0,02 mm bis 2 mm, vorzugsweise 0,05 mm bis 0,8 mm, insbesondere 0,1 mm bis 0,8 mm, von der Fügefläche vorsteht. Die Breite des Schweißeinleitungsansatzes beträgt beispielsweise 0,1 mm bis 3 mm, vorzugsweise 0,4 mm bis 2 mm.

Durch Vorsehung des Schweißeinleitungsansatzes ist beim Heranführen des Hartstoffkörpers an den Zahn eine kleinflächige, gleichsam punkt- oder linien-förmige Abstützung zwischen Zahn und Hartstoffkörper aneinander gegeben, die dadurch vor dem Verschweißen miteinander in einem etwa der Höhe des Schweißeinleitungsansatzes entsprechenden Abstand voneinander gehalten sind, wobei aufgrund der Kleinflächigkeit dieser Abstützung ein relativ hoher elektrischer Übergangswiderstand gegeben ist, der für den Wärmeeintrag in die Werkstücke durch Einleiten eines Schweißimpulses günstig ist. Während des Schweißimpulses wird der Schweißeinleitungsansatz mehr und mehr abgeschmolzen und verschmilzt dabei im Bereich der Fügefläche mit dem angedrückten Hartstoffkörper.

Erfindungsgemäß kann in einem dem Fügevorgang vorhergehenden Schritt an dem jeweiligen Hartstoffkörper mindestens ein von einer Fügefläche des Hartstoffkörpers vorstehender Schweißeinleitungsansatz ausgebildet werden, der beim Einleiten eines Schweißimpulses auf- bzw. eingeschmolzen wird. Insbesondere ist es auch denkbar, dass sowohl an der Fügefläche des Zahns, als auch an der Fügefläche des Hartstoffkörpers jeweils ein oder mehrere Schweißeinleitungsansätze ausgebildet sind.

Unter der Fügefläche des Hartstoffkörpers wird die Fläche des Hartstoffkörpers verstanden, die nach Fügen des Hartstoffkörpers an den Zahn diesen kontaktiert. Der Schweißeinleitungsansatz ist beispielsweise spitzkegelförmig, halbkugelförmig, halbzylinderförmig, tropfenförmig, erbsenförmig oder pyramidenförmig vorstehend von der Fügefläche des Hartstoffkörpers ausgebildet. Die Höhe oder Länge des Schweißeinleitungsansatzes beträgt 0,02 mm bis 2 mm, vorzugsweise 0,05 mm bis 0,8 mm, insbesondere 0,1 mm bis 0,8 mm, sodass der Schweißeinleitungsansatz 0,02 mm bis 2 mm, vorzugsweise 0,05 mm bis 0,8 mm, insbesondere 0,1 mm bis 0,8 mm, von der Fügefläche vorsteht. Die Breite des Schweißeinleitungsansatzes beträgt beispielsweise 0,1 mm bis 3 mm, vorzugsweise 0,4 mm bis 2 mm.

Als besonders vorteilhaft erweist es sich, wenn der Schweißeinleitungsansatz langgestreckt, insbesondere schräg oder orthogonal zur Sägeblattebene, eine Art Rippe oder Steg bildend, ausgebildet ist. Er kann solchermaßen auf wirtschaftliche Weise hergestellt werden, indem mehrere Sägeblätter parallel zueinander angeordnet und dann spanabhebend in einer Querrichtung bearbeitet werden. Durch die Geometrie des Schweißeinleitungsansatzes des Hartstoffkörpers ist beim Heranführen des Hartstoffkörpers an den Zahn unmittelbar vor dem Einleiten des Schweißimpulses eine kleinflächige, gleichsam punkt- oder linien-förmige Abstützung zwischen Zahn und Hartstoffkörper aneinander gegeben. Aufgrund der Kleinflächigkeit dieser Abstützung ist ein relativ hoher elektrischer Übergangswiderstand gegeben, der für den Wärmeeintrag in die Werkstücke durch und bei Einleiten eines Schweißimpulses günstig ist. Während des Schweißimpulses wird der Schweißeinleitungsansatz zügig auf- und abgeschmolzen und verschmilzt dabei im Bereich der Fügefläche mit dem angedrückten Zahn.

Erfindungsgemäß ist vorgesehen, dass der jeweilige Hartstoffkörper in einem dem Fügevorgang vorhergehenden Schritt, insbesondere auf Endform, geschliffen wird. Dies kann bereits beim Hersteller oder Lieferanten der Hartstoffkörper erfolgen.

Unter dem Schleifen auf Endform wird hierbei verstanden, dass an dem Hartstoffkörper eine gewünschte Schneidgeometrie, beispielsweise eine Schneidkante, ausgebildet wird, sodass anschließend nach dem Fügevorgang kein weiterer Schleifvorgang notwendig ist. Ferner kann es bei verschiedenen Arten von Sägeblättern mitunter erforderlich sein, einzelne Zähne eines Sägeblatts gezielt unterschiedlich auszugestalten. In diesem Fall können sich die Endformen verschiedener Hartstoffkörper voneinander unterscheiden. Beispielsweise umfassen Sägeblätter mit einer sogenannten Vor- und Nachschneidegeometrie Zähne mit unterschiedlich breiten Schneidkanten, die abwechselnd hintereinander bei aufeinanderfolgenden Zähnen angefügt sind.

Zur Verbesserung der Schneid- und/oder Gleiteigenschaften kann es sich als vorteilhaft erweisen, wenn der Hartstoffkörper in einem dem Fügevorgang vorhergehenden weiteren Schritt beschichtet wird. Die Beschichtung umfasst beispielsweise, Titancarbid (TiC), Titannitrid (TiN), Titancarbonitrid (TiCN) oder Aluminiumoxyd (Al₂O₃). Sie kann im PVD oder CVD-Verfahren ausgeführt werden. Insbesondere kann es sich als vorteilhaft erweisen, dass der Hartstoffkörper nur teilweise beschichtet wird, wobei insbesondere an der Fügefläche keine Beschichtung vorgesehen wird.

Es kann sich weiter als vorteilhaft erweisen, dass das Heranführen eines jeweiligen Hartstoffkörpers an den sich im Arbeitsbereich befindlichen Zahn ein Zuführen und Übergeben des jeweiligen Hartstoffkörpers mittels einer Zuführeinrichtung an die Fügeeinrichtung umfasst. Die Fügeeinrichtung, also insbesondere ein Schweißkopf oder eine Schweißelektrode einer Schweißeinrichtung, kann dann zusammen mit dem an sie übergebenen Hartstoffkörper in den Arbeitsbereich zugestellt und an den sich dort befindlichen Zahn herangeführt werden.

Vorteilhafterweise umfasst das Zuführen und Übergeben des jeweiligen Hartstoffkörpers mittels der Zuführeinrichtung an die Fügeeinrichtung das Ergreifen eines jeweiligen Hartstoffkörpers mittels einer Robotergreifeinrichtung. In Weiterbildung dieses Erfindungsgedankens erweist es sich als vorteilhaft, wenn die Hartstoffkörper derart bereitgestellt werden, dass sie mittels der Robotergreifeinrichtung auf einfache Weise ergriffen werden können. Beispielsweise ist es denkbar, die Hartstoffkörper, insbesondere in Abhängigkeit ihrer Geometrie ausgerichtet, beispielsweise matrixartig nebeneinander gereiht und/oder gestapelt, vorzuhalten. Insbesondere kann es sich anbieten, die Hartstoffkörper in einem Magazin oder in einem Blister vorzuhalten.

Auf diese Weise ist es beispielsweise möglich, bereits fertig geschliffene Hartstoffkörper in einer bestimmten Orientierung zu ergreifen und an die Fügeeinrichtung zu übergeben.

Eine nicht beanspruchte Vorrichtung zum Durchführen des vorstehend beschriebenen erfindungsgemäßen Verfahrens ist ausgebildet mit einer Sägeblattvorschubeinrichtung zum Bewegen des Sägeblatts in einer Vorschubrichtung, so dass ein jeweiliger Zahn des Sägeblatts in einen Arbeitsbereich der Vorrichtung gebracht werden kann, mit einer in den Arbeitsbereich zustellbaren und wieder aus dem Arbeitsbereich rückstellbaren Fügeeinrichtung, wobei die Fügeeinrichtung zum Fügen eines jeweiligen Hartstoffkörpers an den Zahnrücken eines jeweiligen Zahns ausgebildet ist.

Vorteilhafterweise umfasst die Vorrichtung ferner eine Zuführeinrichtung zum Zuführen und Übergeben eines jeweiligen Hartstoffkörpers an die Fügeeinrichtung. Es erweist sich als vorteilhaft, dass die Zuführeinrichtung eine Robotergreifeinrichtung zum Ergreifen eines jeweiligen Hartstoffkörpers umfasst.

Vorzugsweise umfasst die Vorrichtung zum Durchführen des Verfahrens auch eine Einrichtung zur Vorhaltung von vorzugsweise fertig auf Endform geschliffenen und gegebenenfalls fertig beschichteten und vorzugsweise ausgerichtet dargebotenen Hartstoffkörpern, auf welche die Zuführeinrichtung zum Zuführen und Übergeben des jeweiligen Hartstoffkörpers an die Fügeeinrichtung zugreift.

Weiter ist Gegenstand der Erfindung ein Sägeblatt gemäß Anspruch 5, insbesondere Band- oder Kreissägeblatt, umfassend Zähne und an die Zähne angefügte Hartstoffkörpern, wobei die Hartstoffkörpern auf den Zahnrücken der Zähne angefügt sind.

In Weiterbildung dieses Erfindungsgedankens, erweist es sich als vorteilhaft, dass die Hartstoffkörper vor dem Fügen an die Zähne des Sägeblatts auf Endform geschliffen und gegebenenfalls zusätzlich beschichtet worden sind, sodass unmittelbar im Anschluss an den Fügevorgang ein Sägeblatt mit fertig geschliffenen und gegebenenfalls zusätzlich beschichteten Hartstoffkörpern gebildet ist.

Weitere Vorteile, Merkmale und Einzelheiten der Erfindung ergeben sich aus den Unteransprüchen und aus der nachfolgenden Beschreibung, in der unter Bezugnahme auf die Zeichnung ein bevorzugtes Ausführungsbeispiel im Einzelnen beschrieben ist. Dabei können die in der Zeichnung dargestellten und in den Ansprüchen und in der Beschreibung erwähnten Merkmale jeweils einzeln für sich oder in beliebiger Kombination erfindungswesentlich sein. In der Zeichnung zeigen:
- Figur 1: eine schematische Ansicht einer nicht beanspruchten Vorrichtung zur Durchführung des erfindungsgemäßen Verfahrens mit Sägeblatt von der Seite;
- Figur 2: eine Ansicht der nicht beanspruchten Vorrichtung nach Fig. 1;
- Figur 3: eine Detailansicht einer ersten Ausführungsform des erfindungsgemäßen Sägeblatts mit Hartstoffkörper;
- Figur 4: eine Detailansicht einer zweiten Ausführungsform des erfindungsgemäßen Sägeblatts mit Hartstoffkörper;
- Figur 5: eine Ausführungsform des Sägeblatts gemäß Fig. 3 ohne Hartstoffkörper, und
- Figur 6: eine Ausführungsform des Sägeblatts gemäß Fig. 4 ohne Hartstoffkörper.

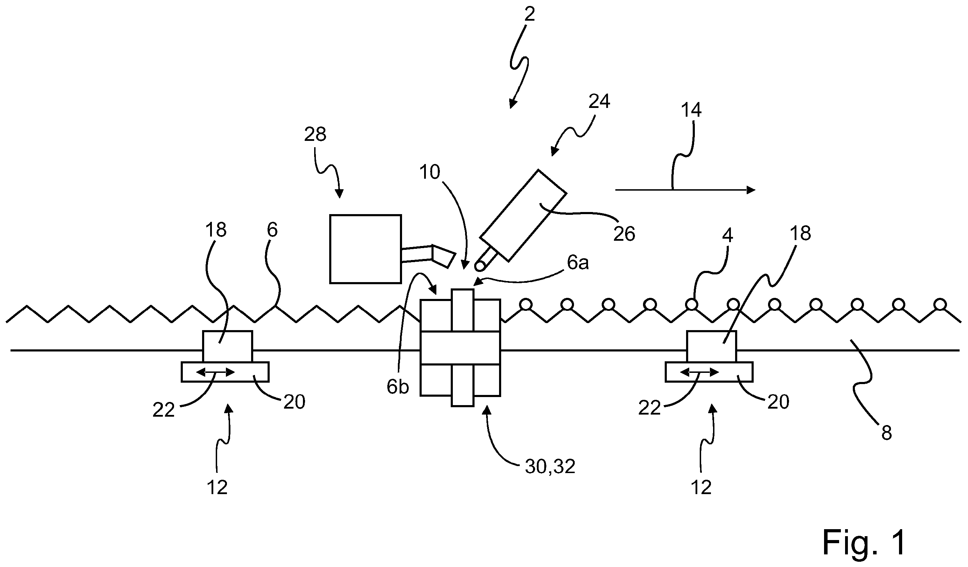

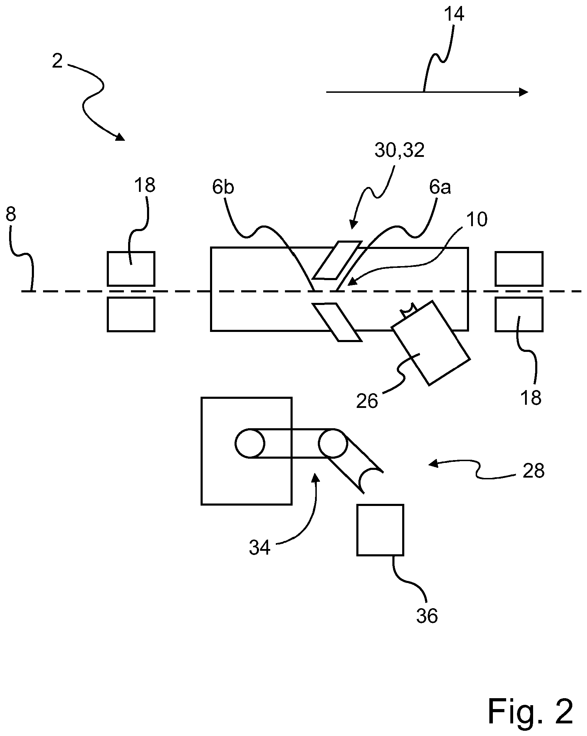

Die Figuren 1 und 2 zeigen eine insgesamt mit dem Bezugszeichen 2 bezeichnete nicht beanspruchte Vorrichtung zum Fügen von Hartstoffkörpern 4 an Zähnen 6 eines Sägeblatts 8 in schematischer Darstellung in einer Ansicht von der Seite und in schematischer Darstellung in einer Ansicht von oben. In den dargestellten Ausführungsformen handelt es sich bei dem Sägeblatt 8 um ein Bandsägeblatt. Die Erfindung ist aber auch anwendbar auf Kreissägeblätter. Das Sägeblatt 8, die Zähne 6 des Sägeblatts 8 und die daran angefügten Hartstoffkörper 4 sind in den Figuren 1 und 2 nur schematisch dargestellt.

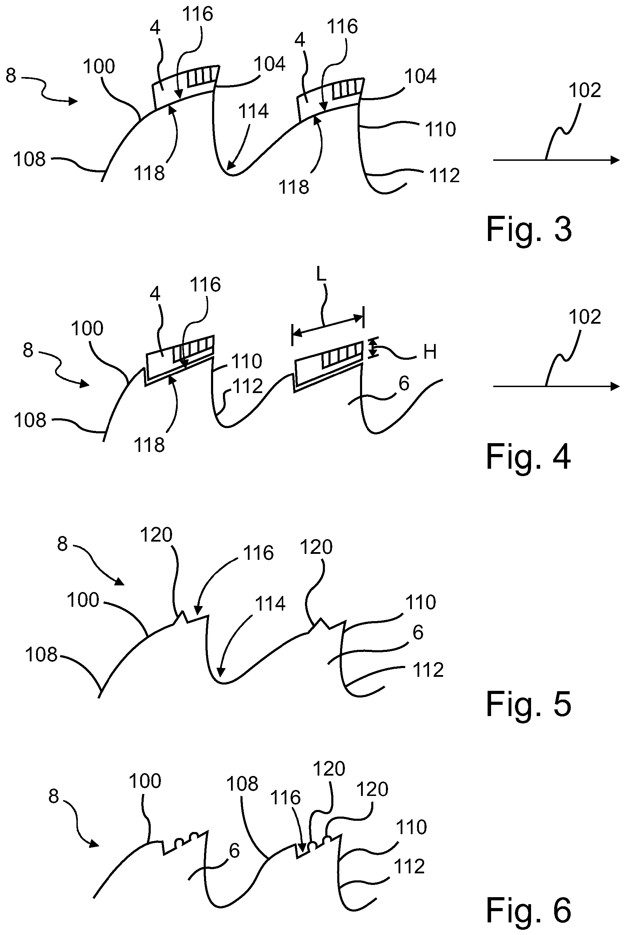

Die nicht beanspruchte Vorrichtung 2 ist dazu ausgebildet, die Hartstoffkörper 4 an Zahnrücken 100 der Zähne des Sägeblatts 8 anzufügen. Die Figuren 3 und 4 zeigen jeweils eine Detailansicht einer Ausführungsform des erfindungsgemäßen Sägeblatts 8 mit an den Zahnrücken 100 angefügten Hartstoffkörpern 4.

Der Hartstoffkörpers weist beispielsweise eine Höhe H von 1 mm bis 4,5 mm, vorzugsweise 1,5 mm bis 3,5 mm, eine Breite von 1 mm bis 6 mm, vorzugweise 1,5 mm bis 3,5 mm und eine Länge L von 2 mm bis 6 mm, vorzugsweise 3 mm bis 4,5 mm auf, wobei die Breite des Hartstoffkörpers gemäß der in den Figuren 3 und 4 dargestellten Ausführungsform die Erstreckung des Hartstoffkörpers orthogonal zur Zeichenebene ist.

Gemäß der dargestellten Ausführungsformen sind die Zähne 6 in Schneidrichtung 102 ausgerichtet, das heißt, Spitzen 104 der Zähne 6 zeigen in die Richtung, in die das Sägeblatt 8 beim Sägevorgang relativ zu einem nicht dargestellten Werkstück zu bewegen ist. Der Zahnrücken 100 ist dabei auf einer von der Schneidrichtung 102 abgewandten, hinteren Seite 108 des Zahns 6 ausgebildet, wobei eine Zahnbrust 110 auf einer in Schneidrichtung 102 vorderen Seite 112 des Zahns 6 ausgebildet ist.

Gemäß der in den Figuren 3 bis 6 dargestellten Ausführungsformen verläuft die Zahnbrust 110 im Wesentlichen annähernd senkrecht zur Schneidrichtung 102. Der Zahnrücken 100 verläuft zumindest abschnittsweise bogenförmig bis zu einem Fuß 114 des nachfolgenden Zahnes 6. Es sind aber auch weitere Ausgestaltungen der Zähne 6, insbesondere Zähne 6 mit einer in Schneidrichtung 102 geneigten Zahnbrust 110 oder Zähne 6 mit einer von der Schneidrichtung 102 weggeneigten Zahnbrust 110, denkbar.

Gemäß der Figuren 3 und 4 ist ein jeweiliger Hartstoffkörper 4 an den Zahnrücken 100 eines jeweiligen Zahns 6 gefügt, wobei eine Fügefläche 116 des Zahns 6 eine Fügefläche 118 des Hartstoffkörpers kontaktiert. In Figur 4 ist die Fügefläche 116 des Zahns durch eine in der Seitenansicht ein L-förmiges Profil aufweisende Aussparung am Zahnrücken 100 gebildet.

Die Figuren 5 und 6 zeigen jeweils eine Detailansicht einer Ausführungsform des erfindungsgemäßen Sägeblatts 8 ohne an den Zähnen 6 angefügte Hartstoffkörper 4. Gemäß der in Figur 5 gezeigten Ausführungsform ist an dem Zahnrücken 100 eines jeweiligen Zahn 6 des Sägeblatts 8 ein von der Fügefläche 116 des Zahns 6 vorstehender Schweißeinleitungsansatz 120 ausgebildet. Der Schweißeinleitungsansatz 120 ist gemäß der dargestellten Ausführungsform in der Seitenansicht spitzzulaufend ausgebildet. Der Schweißeinleitungsansatz 120 kann auch eine beliebige andere Geometrie umfassen. Beispielsweise kann der Schweißeinleitungsansatz 120 spitzkegelförmig, halbkugelförmig, halbzylinderförmig, tropfenförmig, erbsenförmig oder pyramidenförmig, vorstehend von der Fügefläche 116 des Zahns 6 ausgebildet sein.

Durch die Geometrie des Schweißeinleitungsansatzes 120 ist beim Heranführen des Hartstoffkörpers 4 an den Zahn 6 eine kleinflächige, gleichsam punkt- oder linien-förmige Abstützung zwischen Zahn 6 und Hartstoffkörper 4 aneinander gegeben, die dadurch vor dem Verschweißen miteinander in einem etwa der Höhe des Schweißeinleitungsansatzes 120 entsprechenden Abstand voneinander gehalten sind, wobei aufgrund der Kleinflächigkeit dieser Abstützung ein relativ hoher elektrischer Übergangswiderstand gegeben ist, der für den Wärmeeintrag in Zahn 6 und Hartstoffkörper 4 durch Einleiten eines Schweißimpulses günstig ist. Während des Schweißimpulses wird der Schweißeinleitungsansatz 120 mehr und mehr abgeschmolzen und verschmilzt dabei im Bereich der Fügeflächen 116, 118 mit dem Hartstoffkörper 4.

Grundsätzlich können auch mehr als ein von der Fügefläche 116 vorstehender Schweißeinleitungsansatz 120 an dem jeweiligen Zahn 6 ausgebildet sein. Figur 6 zeigt beispielhaft jeweils zwei von der Fügefläche 116 vorstehende Schweißeinleitungsansätze 120 an dem jeweiligen Zahn 6.

Prinzipiell kann auch an dem jeweiligen Hartstoffkörper 4 ein von der Fügefläche 118 vorstehender Schweißeinleitungsansatz ausgebildet sein. Dies ist in den Figuren nicht dargestellt.

Das Fügen der Hartstoffkörper 4 an den Zähnen 6 des Sägeblatts 8 erfolgt in einem Arbeitsbereich 10 der Vorrichtung 2. Dazu wird das Sägeblatt 8 mit einer Sägeblattvorschubeinrichtung 12 in Vorschubrichtung 14 bewegt, sodass ein jeweiliger intendierter Zahn 6a des Sägeblatts 8 in den Arbeitsbereich 10 der Vorrichtung 2 gebracht werden kann. Die Sägeblattvorschubeinrichtung 12 umfasst gemäß der dargestellten Ausführungsform auf Vorschubschlitten 20 montierte Greif- oder Klemmeinrichtungen 18 zum Erfassen des Sägeblatts 8. Die Vorschubschlitten 20 sind beispielsweise mittels eines Antriebs in Richtung des Doppelpfeils 22 parallel zur Vorschubrichtung 14 verfahrbar. Bei dem Antrieb handelt es sich vorzugsweise um einen elektrischen Linearantrieb. Unter dem Bewegen des Sägeblatts 8 in Vorschubrichtung 14 wird bei einem Bandsägeblatt eine translatorische Bewegung und bei einem Kreissägeblatt naturgemäß zumindest auch eine Drehbewegung verstanden.

Gemäß der dargestellten Ausführungsform ist eine Fügeeinrichtung der Vorrichtung 2 zum Fügen der Hartstoffkörper 4 an den Zähnen 6 des Sägeblatts 8 eine Widerstandsschweißeinrichtung 24 mit einer in den Arbeitsbereich 10 zustellbaren und wieder aus dem Arbeitsbereich 10 rückstellbaren Schweißelektrode 26, sodass die Hartstoffkörper 4 mittels Widerstandschweißen an die Zahnrücken 100 der Zähne 6 des Sägeblatts 8 angefügt werden.

Mittels einer Zuführeinrichtung 28 wird ein jeweiliger Hartstoffkörper 4 an die Schweißelektrode 26 zugeführt und an diese übergeben. Der Aufbau und die Funktionsweise der Zuführeinrichtung 28 werden nachfolgend anhand der Figur 2 erläutert. Die Schweißelektrode 26 wird mit dem an sie übergebenen Hartstoffkörper 4 in den Arbeitsbereich 10 der Vorrichtung 2 zugestellt, und der Hartstoffkörper 4 wird dabei an den Zahn 6a des Sägeblatts 4 herangeführt.

Ferner umfasst die Vorrichtung 2 gemäß der dargestellten Ausführungsform eine erste Zentriereinrichtung 30 zum Zentrieren des Sägeblatts 8 vor dem Schweißvorgang quer zu Vorschubrichtung 14 und eine zweite Zentriereinrichtung 32 zum Zentrieren des jeweiligen Hartstoffkörpers 4 quer zur Vorschubrichtung 14 vor dem Anschweißen an den jeweiligen intendierten sich in der Zielposition befindlichen Zahn 6a des Sägeblatts 8. Die erste und zweite Zentriereinrichtung 30, 32 können durch an sich beliebige Stellorgane gebildet sein. Weiter können die Zentriereinrichtungen 30, 32 jeweils eine Greiferanordnung mit quer oder schräg zur Vorschubrichtung aufeinander zu bzw. voneinander weg bewegbaren ersten Greiferbacken umfassen. Auf die Funktionsweise und den Aufbau der ersten und der zweiten Zentriereinrichtung 30, 32 wird an dieser Stelle nicht weiter eingegangen.

Nachdem der Schweißvorgang beendet ist, wird das Sägeblatt 8 mittels der Sägeblattvorschubeinrichtung 12 weiter in Vorschubrichtung 14 bewegt, sodass ein nachfolgender Zahn 6b in die Zielposition gebracht werden kann.

Im Folgenden wird nun anhand der Figur 2 Aufbau und Funktionsweise der Zuführeinrichtung 28 erläutert. Mittels einer Robotergreifeinrichtung 34 werden Hartstoffkörper 4 von einer Vorhalteeinrichtung 36 gegriffen und an die Schweißelektrode 26 übergeben. Bei der Vorhalteeinrichtung 36 handelt es beispielsweise um eine Platte, auf der die Hartstoffkörper, insbesondere in Abhängigkeit ihrer Geometrie ausgerichtet, beispielsweise matrixartig nebeneinander gereiht und/oder gestapelt, vorgehalten werden. Ferner ist es auch denkbar, die Hartstoffkörper in einem Magazin oder in einem Blister vorzuhalten. Die Robotergreifeinrichtung 34 greift einen Hartstoffkörper 4 von der Vorhalteeinrichtung 36 und übergibt ihn an die Schweißelektrode 26, die dann zusammen mit dem an sie übergebenen Hartstoffkörper 4 an den sich in der Zielposition befindlichen Zahn 6a des Sägeblatts 8 herangeführt wird. Anschließend wird der Hartstoffkörper 4 in einem Schweißvorgang an den Zahnrücken des Zahns 6a angeschweißt. Nachdem der Schweißvorgang beendet ist, wird das Sägeblatt 8 mittels der Sägeblattvorschubeinrichtung 12 weiter in Vorschubrichtung 14 bewegt, sodass ein nachfolgender Zahn 6b in die Zielposition 16 gebracht werden kann. Die Robotergreifeinrichtung 34 greift dann einen weiteren geeigneten Hartstoffkörper 4 von der Vorhalteeinrichtung 36 und übergibt diesen an die Schweißelektrode 26.

## Patentansprüche

1. Verfahren zum Fügen von Hartstoffkörpern (4) an Zähne (6) eines Sägeblatts (8), insbesondere eines Band- oder Kreissägeblatts, wobei ein jeweiliger Zahn eine Zahnbrust (110) und einen Zahnrücken (100) aufweist, und wobei das Verfahren die folgenden Schritte umfasst:
- Verbringen eines jeweiligen Zahns (6) des Sägeblatts (8) in einen Arbeitsbereich (10);
- Heranführen eines jeweiligen Hartstoffkörpers (4) an den sich im Arbeitsbereich (10) befindlichen Zahn (6) ;
- Zustellen einer Fügeeinrichtung (24) in den Arbeitsbereich (10);
- Fügen des Hartstoffkörpers (4) an den sich im Arbeitsbereich (10) befindlichen Zahn (6);
- Rückstellen der Fügeeinrichtung (24) aus dem Arbeitsbereich (10);
**dadurch gekennzeichnet, dass** der jeweilige Hartstoffkörper (4) an den Zahnrücken (100) des jeweiligen Zahns (6) gefügt wird, wobei die Fügeeinrichtung (24) eine Schweißeinrichtung mit einer Schweißelektrode (26) ist, und der jeweilige Hartstoffkörper (4) und der jeweilige Zahn (6) durch Widerstandsschweißen aneinander gefügt werden, und wobei in einem dem Fügevorgang vorhergehenden Schritt an dem Zahnrücken (100) eines jeweiligen Zahns (4) des Sägeblatts (8) oder an dem jeweiligen Hartstoffkörper (4) mindestens ein von einer Fügefläche (116) des Zahns (6) oder von einer Fügefläche (118) des Hartstoffkörpers (4) vorstehender Schweißeinleitungsansatz (120) ausgebildet wird, der beim Einleiten eines Schweißimpulses aufgeschmolzen wird, und der jeweilige Hartstoffkörper (4) in einem dem Fügevorgang vorhergehenden Schritt, insbesondere auf Endform, geschliffen wird.

2. Verfahren nach Anspruch 1, **dadurch gekennzeichnet, dass** der Hartstoffkörper (4) in einem dem Fügevorgang vorhergehenden weiteren Schritt beschichtet wird.

3. Verfahren nach einem oder mehreren der vorhergehenden Ansprüche, **dadurch gekennzeichnet, dass** das Heranführen eines jeweiligen Hartstoffkörpers (4) an den sich im Arbeitsbereich (10) befindlichen Zahn (6) ein Zuführen und Übergeben des jeweiligen Hartstoffkörpers (4) mittels einer Zuführeinrichtung (28) an die Fügeeinrichtung (24) umfasst.

4. Verfahren nach Anspruch 3, **dadurch gekennzeichnet, dass** das Zuführen und Übergeben des Hartstoffkörpers (4) mittels der Zuführeinrichtung (28) an die Fügeeinrichtung (24) das Ergreifen eines jeweiligen Hartstoffkörpers (4) mittels einer Robotergreifeinrichtung (34) umfasst.

5. Sägeblatt (8), insbesondere Band- oder Kreissägeblatt, umfassend Zähne (6) und an die Zähne (6) angefügte Hartstoffkörper (4), wobei ein jeweiliger Zahn (6) eine Zahnbrust (110) und einen Zahnrücken (100) umfasst, **dadurch gekennzeichnet, dass** die Hartstoffkörper (4) durch Schweißen, insbesondere Widerstandsschweißen, an die Zahnrücken (100) der Zähne (6) angefügt sind, und zwar derart, dass mindestens ein an dem Zahnrücken (100) eines jeweiligen Zahns (4) des Sägeblatts (8) oder an dem jeweiligen Hartstoffkörper (4) von einer Fügefläche (116) des Zahns (6) oder von einer Fügefläche (118) des Hartstoffkörpers (4) vorstehender Schweißeinleitungsansatz (120) beim Einleiten eines Schweißimpulses aufgeschmolzen worden ist, und wobei die Hartstoffkörper (4) vor dem Fügen an die Zähne (6) des Sägeblatts (8) auf Endform geschliffen worden sind, sodass unmittelbar im Anschluss an den Fügevorgang ein Sägeblatt (8) mit fertig geschliffenen Hartstoffkörpern (4) gebildet ist.

6. Sägeblatt nach Anspruch 5, **dadurch gekennzeichnet, dass** die Hartstoffkörper (4) vor dem Fügen an die Zähne (6) des Sägeblatts (8) beschichtet worden sind, sodass unmittelbar im Anschluss an den Fügevorgang ein Sägeblatt (8) mit fertig geschliffenen und beschichteten Hartstoffkörpern (4) gebildet ist.

## Claims

1. Method for joining hard material bodies (4) to teeth (6) of a saw blade (8), in particular of a band saw blade or circular saw blade, each tooth having a tooth face (110) and a tooth back (100), and the method comprising the following steps:
- bringing each tooth (6) of the saw blade (8) into a working region (10);
- guiding each hard material body (4) toward the tooth (6) located in the working region (10);
- advancing a joining device (24) into the working region (10);
- joining the hard material body (4) to the tooth (6) located in the working region (10);
- and withdrawing the joining device (24) out of the working region (10);
**characterized in that** each hard material body (4) is joined to the tooth back (100) of each tooth (6) wherein the joining device (24) is a welding device having a welding electrode (26), and each hard material body (4) and each tooth (6) are joined to one another by resistance welding and **in that** in a step preceding the joining process, at least one welding introduction attachment (120) protruding from a joining surface (116) of the tooth (6) or from a joining surface (118) of the hard material body (4) is formed on the tooth back (100) of each tooth (4) of the saw blade (8) or at each hard material body (4), the welding introduction attachment (120) being melted when a welding pulse is introduced and **in that** each hard material body (4) is ground, in particular to its final shape, in a step preceding the joining process.

2. Method according to claim 1, **characterized in that** the hard material body (4) is coated in a further step preceding the joining process.

3. Method according to one or more of the preceding claims, **characterized in that** guiding each hard material body (4) toward the tooth (6) located in the working region (10) comprises supplying and transferring each hard material body (4) to the joining device (24) by means of a supply device (28).

4. Method according to claim 3, **characterized in that** supplying and transferring the hard material body (4) to the joining device (24) by means of the supply device (28) comprises gripping each hard material body (4) by means of a robot gripping device (34).

5. Saw blade (8), in particular band saw blade or circular saw blade, comprising teeth (6) and hard material bodies (4) attached to the teeth (6), each tooth (6) comprising a tooth face (110) and a tooth back (100), **characterized in that** the hard material bodies (4) are attached to the tooth backs (100) of the teeth (6) by welding, in particular by resistance welding in such a way that on the tooth back (100) of each tooth (4) of the saw blade (8) or at each hard material body (4) at least one welding introduction attachment (120) protruding from a joining surface (116) of the tooth (6) or from a joining surface (118) of the hard material body (4) has been melted when a welding pulse is introduced and wherein the hard material bodies (4) had been ground to their final shape before being joined to the teeth (6) of the saw blade (8) such that a saw blade (8) having fully ground hard material bodies (4) is formed directly after the joining process.

6. Saw blade according to claim 5, **characterized in that** the hard material bodies (4) have been coated before being joined to the teeth (6) of the saw blade (8) such that a saw blade (8) having fully ground and coated hard material bodies (4) is formed directly after the joining process.

## Revendications

1. Procédé pour assembler des corps en matériau dur (4) aux dents (6) d'une lame de scie (8), en particulier d'une lame de scie à ruban ou circulaire, dans lequel une dent respective présente une face avant de dent (110) et une face arrière de dent (100), et dans lequel le procédé comprend les étapes suivantes:
- l'amenée d'une dent (6) respective de la lame de scie (8) dans une zone de travail (10);
- le rapprochement d'un corps en matériau dur (4) respectif de la dent (6) se trouvant dans la zone de travail (10);
- le placement d'un système d'assemblage (24) dans la zone de travail (10);
- l'assemblage du corps en matériau dur (4) à la dent (6) se trouvant dans la zone de travail (10);
- le retrait du système d'assemblage (24) de la zone de travail (10);
**caractérisé en ce que** le corps en matériau dur (4) respectif est assemblé à la face arrière de dent (100) de la dent (6) respective, dans lequel le système d'assemblage (24) est un système de soudage avec une électrode de soudage (26), et le corps en matériau dur (4) respectif et la dent (6) respective sont assemblés l'un à l'autre par soudage par résistance, et dans lequel dans une étape précédant le processus d'assemblage au moins une partie saillante d'application de soudage (120) faisant saillie d'une surface d'assemblage (116) de la dent (6) ou d'une surface d'assemblage (118) du corps en matériau dur (4), qui est fondue lors de l'application d'une impulsion de soudage, est réalisée sur la face arrière de dent (100) d'une dent (4) respective de la lame de scie (8) ou sur le corps en matériau dur (4) respectif, et le corps en matériau dur (4) respectif est rectifié, en particulier à la forme finale dans une étape précédant le processus d'assemblage.

2. Procédé selon la revendication 1, **caractérisé en ce que** le corps en matériau dur (4) est revêtu dans une autre étape précédant le processus d'assemblage.

3. Procédé selon l'une ou plusieurs des revendications précédentes, **caractérisé en ce que** le rapprochement d'un corps en matériau dur (4) respectif de la dent (6) se trouvant dans la zone de travail (10) comprend un acheminement et transfert du corps en matériau dur (4) respectif au moyen d'un système d'acheminement (28) sur le système d'assemblage (24).

4. Procédé selon la revendication 3, **caractérisé en ce que** l'acheminement et le transfert du corps en matériau dur (4) au moyen du système d'acheminement (28) sur le système d'assemblage (24) comprend la saisie d'un corps en matériau dur (4) respectif au moyen d'un système de préhension de robot (34).

5. Lame de scie (8), en particulier lame de scie à ruban ou circulaire, comprenant des dents (6) et des corps en matériau dur (4) assemblés aux dents (6), dans laquelle une dent (6) respective comprend une face avant de dent (110) et une face arrière de dent (100), **caractérisée en ce que** les corps en matériau dur (4) sont assemblés aux faces arrière de dent (100) des dents (6) par soudage, en particulier soudage par résistance, et ce de telle sorte qu'au moins une partie saillante d'application de soudage (120) faisant saillie d'une surface d'assemblage (116) de la dent (6) ou d'une surface d'assemblage (118) du corps en matériau dur (4) sur la face arrière de dent (100) d'une dent (4) respective de la lame de scie (8) ou sur le corps en matériau dur (4) respectif a été fondu lors de l'application d'une impulsion de soudage, et dans laquelle les corps en matériau dur (4) ont été rectifiés à la forme finale avant l'assemblage aux dents (6) de la lame de scie (8), de sorte qu'une lame de scie (8) avec des corps en matériau dur (4) entièrement rectifiés est formée immédiatement à la suite du processus d'assemblage.

6. Lame de scie selon la revendication 5, **caractérisée en ce que** les corps en matériau dur (4) ont été revêtus avant l'assemblage aux dents (6) de la lame de scie (8), de sorte qu'une lame de scie (8) avec des corps en matériau dur (4) entièrement rectifiés et revêtus est formée immédiatement à la suite du processus d'assemblage.
